(19) **Europäisches Patentamt**
**European Patent Office**
**Office européen des brevets**

(11) **EP 4 769 176 A1**

(12) **EUROPEAN PATENT APPLICATION**

(43) Date of publication:
**01.07.2026 Bulletin 2026/27**

(21) Application number: **25202564.8**

(22) Date of filing: **16.09.2025**

(51) International Patent Classification (IPC):
*G06F 16/3329* (2025.01)    *A01C 21/00* (2006.01)
*A01C 23/00* (2006.01)    *A01C 23/04* (2006.01)
*A01G 25/16* (2006.01)    *A01M 7/00* (2006.01)
*G06F 16/36* (2019.01)    *G06N 20/00* (2019.01)
*G06Q 50/02* (2024.01)

(52) Cooperative Patent Classification (CPC):
**G06F 16/367; G06F 16/33295; G06N 3/042;
G06N 3/044; G06N 3/08; G06N 3/084; G06N 3/126;
G06N 5/01; G06N 5/02; G06N 5/022; G06N 5/04;
G06N 5/041; G06N 7/01; G06N 20/00; G06Q 50/02;**
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.12.2024 IN 202421102594**

(71) Applicant: **Tata Consultancy Services Limited
Maharashtra (IN)**

(72) Inventors:
• **RAJPOOT, Nandan Singh
452018 Indore, Madhya Pradesh (IN)**

• **SINGH, Dineshkumar Jang Bahadur
400601 Mumbai, Maharashtra (IN)**
• **PANDIT, Ankur
452018 Indore, Madhya Pradesh (IN)**
• **SARANGI, Sanat
400601 Mumbai, Maharashtra (IN)**
• **MOHITE, Jayantrao
400601 Mumbai, Maharashtra (IN)**
• **PAPPULA, Srinivasu
500081 Hyderabad, Telangana (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR AUTOMATED FARM MANAGEMENT THROUGH INTELLIGENT RESPONSE GENERATION USING CONNECTED QUERY GRAPHS**

(57)    This disclosure relates generally to a method and system for the automated farm management by utilizing connected graphs to navigate through unexpected future events affecting the farm. State-of-art methods for prediction of the unexpected future events is based a vast asynchronous data distributed across various complex data analytics tools. And it becomes difficult to choose most suitable actions to be taken to navigate the future event based on the asynchronous data. The present disclosure addresses these problems through a method that utilizes a graphical form of a plurality of sensor data collected from the farm to derive refined multi-contextual intelligent queries. The refined multi-contextual intelligent query is provided to a remotely located LLM model to generate a set of recommendations. The most suitable recommendation is transmitted to an associated autonomous farm machinery to take a suitable action. The method utilizes a feedback mechanism to improve future query generation.

FIG. 2

(52) Cooperative Patent Classification (CPC): (Cont.)
A01C 21/007; A01G 25/00

**Description**

CROSS-REFERENCE TO RELATED APPLICATIONS AND PRIORITY

The present application claims priority from Indian patent application no. 202421102594, filed on December 24, 2024.

TECHNICAL FIELD

The disclosure herein generally relates to farm management and, more particularly, to systems and methods for farm management through intelligent response generation using connected query graphs .

BACKGROUND

In a smart farming environment, farmers use Internet of Things (IoT) sensors and other sensor devices to collect environmental and machine metrics, to make informed decisions and to improve just about every aspect o **[0004]** f their work. These IoT sensors and other sensor devices work collaboratively to understand their environment, detect events, and execute appropriate commands and actions. Autonomous equipment like smart tractors, harvesters and rovers require advanced navigation and control systems to operate effectively which can be affected by factors like weather conditions, terrain and sensor accuracy. Determining the sensor reliability is key to the success of the operations. Managing and analyzing the large amounts of data generated by the autonomous equipment can be a challenge, requires advanced data analytics and management systems at the farm edge level. Another challenge lies with the compatibility of edge devices with remote servers. The edge devices and the remote server must share a common ontology to ensure consistent understanding of the concepts and terminology. Edge devices computation may be limited in comparison to the remote servers. The edge devices have to balance communication with respect to power consumption to ensure prolonged operations. Another challenge is with the communication. The communication with the remote servers can be challenging due to the lack of reliable connectivity, delays in transmitting critical data such as weather updates or soil moisture levels or events, harsh environment such inclement weather, or limited rural infrastructure such as cell towers, latency etc. Besides these parameters, the data transmission costs may be prohibitive leading to requirement of data compression. To ensure optimal utilization of sensor data collected through IoT sensors and other sensor devices, autonomous farm management systems should prioritize reliable and secure communication protocols, automate, and optimize the level and amount of communication required with the remote entity.

SUMMARY

Embodiments of the present disclosure present technological improvements as solutions to one or more of the above-mentioned technical problems recognized by the inventors in conventional systems. For example, in one embodiment, a method for farm management by automated response generation to navigate through future events affecting the farm is provided. The method utilizes a farm agent and a cloud agent. The farm agent executes (a) identification of one or more possible events affecting the farm, and (b) generation of set of multi-contextual intelligent queries in response to the one or more possible events identified. The cloud agent generates a set of the associated relevant responses and recommendation of the at least one actionable instruction.. The farm agent and the cloud agent communicates to each other via an application programming interface (API). The method includes receiving via one or more hardware processors, a plurality of data points from a geocoded farm through one or more sensors, wherein the plurality of data points, and a contextual knowledge associated with each one of the plurality of data points are processed to identity a plurality of context aware events. The plurality of data points are one or more agricultural data gathered from a geocoded farm comprises of the one or more data points collected from one or more sensors. The one or more sensors include a plurality of IoT sensors, one or more sensor-based devices installed in the farm or on the autonomous farm equipments, and other sensors involved in data capture and generation. The method further includes assessing, via the one or more hardware processors, the plurality of context aware events on a severity level by using one or more NLP techniques to identify at least one possible event from the plurality of context aware events. The assessment is based on understanding a severity level associated with each context aware event. The severity level is defined by an urgency level and an intensity level. The assessment of the urgency associated with each context aware event as well as the intensity associated with each context aware event is utilized to derive the magnitude of the severity level. Based on the severity level, the at least one possible event from the plurality of context aware events is identified and prioritized. The method further includes generating, via the one or more hardware processors, a sensor graph by fusing one or more data points from the plurality of data points relevant to at least one possible event using a graphical neural network (GNN) model, and wherein the sensor graph represents the at least one possible event. The relevant data points with respect to each possible event are provided to the GNN model. The GNN utilizes the data points associated with each possible event and generate the sensor graph by fusing the data points. **In** the sensor graph, each data point belong to a sensor type (temperature, humidity, etc.) or to relevant environmental factors (e.g., soil conditions, plant health) that are represented as nodes. The method further includes processing, via the one or more hardware processors, the sensor graph representing the at least one possible event using a pre-trained natural language processing (NLP) model to identify one or more knowledge graphs from among a plurality of knowledge graphs matching the sensor graph. The plurality of knowledge graphs are stored in a graph queries database (DB), and wherein the one or more knowledge graphs matching the sensor graph represents a set of multi-contextual intelligent queries. The graph queries DB comprises a plurality of relevant farming information, and wherein the plurality of relevant farming information comprises an associated knowledge of one or more crops, one or more recommended agronomy practices, one or more fields, one or more region, climate type and soil type. The method further includes refining, via the one or more hardware processors, the set of multi-contextual intelligent queries by utilizing one or more weighted principles of communications, and one or more event specific domain-based vocabulary to obtain a set of refined multi-contextual intelligent queries. Each refined multi-contextual intelligent query within the set of refined multi-contextual intelligent queries are ranked using on or more query ranking algorithms. The refinement and ranking process majorly involves three steps, (i) feature extraction, (ii) principle specific scoring, and (iii) weight assignment. The feature extraction from each multi-contextual intelligent queries involves understanding a key concept and extracting one or more features like sentence structure, word count, and accordingly assigning a readability score to each extracted feature. The principle specific scoring of each multi-contextual intelligent query involves assessment based on one or more principle of communication like (a) Clarity (CL), (b) Relevance (R), (c) Conciseness (CO), (d) Specificity (SP), and (e) Accuracy (AC). And the weight assignment post principle specific scoring involves adjusting one or more weights assigned to each principle of communication to fine-tune the query refinement process. The method further includes generating, via the one or more hardware processors, a set of actionable instructions by sending a set of refined multi-contextual intelligent queries to at least one LLM model. The at least one LLM model sequentially processes each refined multi-contextual intelligent query from among the refined multi-contextual intelligent queries and generates a relevant response against each refined multi-contextual intelligent query. Once the set of refined multi-contextual intelligent queries are generated based on the sensor data and the NLP processing, the farm agent 110A transmits it through an API call to the LLM model. The LLM model then processes each refined multi-contextual intelligent query sequentially and generates the relevant response against each multi-contextual intelligent query, which is returned to the farm agent. The method further includes recommending, via the one or more hardware processors, at least one actionable instructions from the set of actionable instructions to be performed in the farm in response to the at least one possible event. The at least one actionable instruction to be performed in the farm is obtained by processing a pair of the refined multi-contextual intelligent queries from the set of refined multi-contextual intelligent queries and the relevant response, using a pre-trained AI/ML model. The pre-trained AI/ML model is a dynamic model and are based on one or more parameters relevant to one or more farm management scenarios, and wherein the AI/ML model utilizes one or more domain specific rules, one or more context specific rules, and one or more rules specific to weather, climate and geography. The at least one actionable instruction from the set of actionable instructions is transmitted to one or more farm machineries in response to the at least one possible event. One or more feedback from the one or more farm machineries assesses an accuracy of the at least one actionable instruction transmitted in response to the at least one possible event, wherein the feedback is utilized for generation of a next set of multi-contextual intelligent queries in response to one or more next possible events.

In another aspect, a system for farm management by automated response generation to navigate through future events affecting the farm is provided. The system includes at least one memory storing programmed instructions; one or more Input /Output (I/O) interfaces; and one or more hardware processors, a farm management model, operatively coupled to a corresponding at least one memory, wherein the system is configured to receive a plurality of data points from a geocoded farm through one or more sensors, wherein the plurality of data points, and a contextual knowledge associated with each one of the plurality of data points are processed to identity a plurality of context aware events. The plurality of data points are one or more agricultural data gathered from a geocoded farm comprises of the one or more data points collected from one or more sensors. The one or more sensors include a plurality of IoT sensors, one or more sensor-based devices installed in the farm or on the autonomous farm equipments, and other sensors involved in data capture and generation. The system is configured to assess the plurality of context aware events on a severity level by using one or more NLP techniques to identify at least one possible event from the plurality of context aware events. The assessment is based on understanding a severity level associated with each context aware event. The severity level is defined by an urgency level and an intensity level. The assessment of the urgency associated with each context aware event as well as the intensity associated with each context aware event is utilized to derive the magnitude of the severity level. Based on the severity level, the at least one possible event from the plurality of context aware events is identified and prioritized. The system is configured to generate a sensor graph by fusing one or more data points from the plurality of data points relevant to at least one possible event using a graphical neural network (GNN) model, and wherein the sensor graph represents the at least one possible event. The relevant data points with respect to each possible event are provided to the GNN model. The GNN utilizes the data points associated with each possible event and generate the sensor graph by fusing the data points. **In** the sensor graph, each data point belong to a sensor type (temperature, humidity, etc.) or to relevant environmental factors (e.g., soil conditions, plant health) that are represented as nodes. The system is configured to process the sensor graph representing the at least one possible event using a pre-trained natural language processing (NLP) model to identify one or more knowledge graphs from among a plurality of knowledge graphs matching the sensor graph. The plurality of knowledge graphs are stored in a graph queries database (DB), and wherein the one or more knowledge graphs matching the sensor graph represents a set of multi-contextual intelligent queries. The graph queries DB comprises a plurality of relevant farming information, and wherein the plurality of relevant farming information comprises an associated knowledge of one or more crops, one or more recommended agronomy practices, one or more fields, one or more region, climate type and soil type. The system is configured to refine the set of multi-contextual intelligent queries by utilizing one or more weighted principles of communications, and one or more event specific domain-based vocabulary to obtain a set of refined multi-contextual intelligent queries. Each refined multi-contextual intelligent query within the set of refined multi-contextual intelligent queries are ranked using on or more query ranking algorithms. The refinement and ranking process majorly involves three steps, (i) feature extraction, (ii) principle specific scoring, and (iii) weight assignment. The feature extraction from each multi-contextual intelligent queries involves understanding a key concept and extracting one or more features like sentence structure, word count, and accordingly assigning a readability score to each extracted feature. The principle specific scoring of each multi-contextual intelligent query involves assessment based on one or more principle of communication like (a) Clarity (CL), (b) Relevance (R), (c) Conciseness (CO), (d) Specificity (SP), and (e) Accuracy (AC). And the weight assignment post principle specific scoring involves adjusting one or more weights assigned to each principle of communication to fine-tune the query refinement process. The system is configured to generate a set of actionable instructions by sending a set of refined multi-contextual intelligent queries to at least one LLM model. The at least one LLM model sequentially processes each refined multi-contextual intelligent query from among the refined multi-contextual intelligent queries and generates a relevant response against each refined multi-contextual intelligent query. Once the set of refined multi-contextual intelligent queries are generated based on the sensor data and the NLP processing, the farm agent 110A transmits it through an API call to the LLM model. The LLM model then processes each refined multi-contextual intelligent query sequentially and generates the relevant response against each multi-contextual intelligent query, which is returned to the farm agent. The system is configured to recommend at least one actionable instructions from the set of actionable instructions to be performed in the farm in response to the at least one possible event. The at least one actionable instruction to be performed in the farm is obtained by processing a pair of the refined multi-contextual intelligent queries from the set of refined multi-contextual intelligent queries and the relevant response, using a pre-trained AI/ML model. The pre-trained AI/ML model is a dynamic model and are based on one or more parameters relevant to one or more farm management scenarios, and wherein the AI/ML model utilizes one or more domain specific rules, one or more context specific rules, and one or more rules specific to weather, climate and geography. The at least one actionable instruction from the set of actionable instructions is transmitted to one or more farm machineries in response to the at least one possible event. One or more feedback from the one or more farm machineries assesses an accuracy of the at least one actionable instruction transmitted in response to the at least one possible event, wherein the feedback is utilized for generation of a next set of multi-contextual intelligent queries in response to one or more next possible events.

**In** yet another aspect, there are provided one or more non-transitory machine-readable information storage mediums comprising one or more instructions for farm management by automated response generation to navigate through future events affecting the farm is provided. The one or more non-transitory machine-readable information storage mediums when executed by the one or more hardware processors cause:

receiving a plurality of data points from a geocoded farm through one or more sensors, wherein the plurality of data points, and a contextual knowledge associated with each one of the plurality of data points are processed to identity a plurality of context aware events. The plurality of data points are one or more agricultural data gathered from a geocoded farm comprises of the one or more data points collected from one or more sensors. The one or more sensors include a plurality of IoT sensors, one or more sensor-based devices installed in the farm or on the autonomous farm equipments, and other sensors involved in data capture and generation. The one or more non-transitory machine-readable information storage mediums when executed by the one or more hardware processors cause: assessing the plurality of context aware events on a severity level by using one or more NLP techniques to identify at least one possible event from the plurality of context aware events. The assessment is based on understanding a severity level associated with each context aware event. The severity level is defined by an urgency level and an intensity level. The assessment of the urgency associated with each context aware event as well as the intensity associated with each context aware event is utilized to derive the magnitude of the severity level. Based on the severity level, the at least one possible event from the plurality of context aware events is identified and prioritized. The one or more non-transitory machine-readable information storage mediums when executed by the one or more hardware processors cause: generating a sensor graph by fusing one or more data points from the plurality of data points relevant to at least one possible event using a graphical neural network (GNN) model, and wherein the sensor graph represents the at least one possible event. The relevant data points with respect to each possible event are provided to the GNN model. The GNN utilizes the data points associated with each possible event and generate the sensor graph by fusing the data points. **In** the sensor graph, each data point belong to a sensor type (temperature, humidity, etc.) or to relevant environmental factors (e.g., soil conditions, plant health) that are represented as nodes. The one or more non-transitory machine-readable information storage mediums when executed by the one or more hardware processors cause: processing the sensor graph representing the at least one possible event using a pre-trained natural language processing (NLP) model to identify one or more knowledge graphs from among a plurality of knowledge graphs matching the sensor graph. The plurality of knowledge graphs are stored in a graph queries database (DB), and wherein the one or more knowledge graphs matching the sensor graph represents a set of multi-contextual intelligent queries. The graph queries DB comprises a plurality of relevant farming information, and wherein the plurality of relevant farming information comprises an associated knowledge of one or more crops, one or more recommended agronomy practices, one or more fields, one or more region, climate type and soil type. The one or more non-transitory machine-readable information storage mediums when executed by the one or more hardware processors cause: refining the set of multi-contextual intelligent queries by utilizing one or more weighted principles of communications, and one or more event specific domain-based vocabulary to obtain a set of refined multi-contextual intelligent queries. Each refined multi-contextual intelligent query within the set of refined multi-contextual intelligent queries are ranked using on or more query ranking algorithms. The refinement and ranking process majorly involves three steps, (i) feature extraction, (ii) principle specific scoring, and (iii) weight assignment. The feature extraction from each multi-contextual intelligent queries involves understanding a key concept and extracting one or more features like sentence structure, word count, and accordingly assigning a readability score to each extracted feature. The principle specific scoring of each multi-contextual intelligent query involves assessment based on one or more principle of communication like (a) Clarity (CL), (b) Relevance (R), (c) Conciseness (CO), (d) Specificity (SP), and (e) Accuracy (AC). And the weight assignment post principle specific scoring involves adjusting one or more weights assigned to each principle of communication to fine-tune the query refinement process. generating a set of actionable instructions by sending a set of refined multi-contextual intelligent queries to at least one LLM model. The at least one LLM model sequentially processes each refined multi-contextual intelligent query from among the refined multi-contextual intelligent queries and generates a relevant response against each refined multi-contextual intelligent query. Once the set of refined multi-contextual intelligent queries are generated based on the sensor data and the NLP processing, the farm agent 110A transmits it through an API call to the LLM model. The LLM model then processes each refined multi-contextual intelligent query sequentially and generates the relevant response against each multi-contextual intelligent query, which is returned to the farm agent. recommending at least one actionable instructions from the set of actionable instructions to be performed in the farm in response to the at least one possible event. The at least one actionable instruction to be performed in the farm is obtained by processing a pair of the refined multi-contextual intelligent queries from the set of refined multi-contextual intelligent queries and the relevant response, using a pre-trained AI/ML model. The pre-trained AI/ML model is a dynamic model and are based on one or more parameters relevant to one or more farm management scenarios, and wherein the AI/ML model utilizes one or more domain specific rules, one or more context specific rules, and one or more rules specific to weather, climate and geography. The at least one actionable instruction from the set of actionable instructions is transmitted to one or more farm machineries in response to the at least one possible event. One or more feedback from the one or more farm machineries assesses an accuracy of the at least one actionable instruction transmitted in response to the at least one possible event, wherein the feedback is utilized for generation of a next set of multi-contextual intelligent queries in response to one or more next possible events.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system 100 for automated farm management by utilizing connected graphs to navigate through future events affecting the farm, according to some embodiments of the present disclosure.

FIG. 2 illustrates an overall framework for the automated farm management involving future event prediction, query generation, response generation, and transmission of generated responses to autonomous farm equipments, according to some embodiments of the present disclosure.

FIGS. 3A, 3B and 3C depict flow diagrams of an illustrative method for the automated farm management by utilizing connected graphs to navigate through future events affecting the farm, using the system of FIG. 1, according to some embodiments of the present disclosure.

FIG. 4 depicts a sensor graph representing relationships and dependencies between different sensor readings, according to some embodiments of the present disclosure.

FIG. 5 illustrates construction of refined multi-contextual intelligent query using one or more principles of communication (PCom), weights and vocabulary, according to some embodiments of the present disclosure.

FIGS. 6A and 6B are a graphical illustration of a query stored in a graph queries DB in the form of a knowledge graph, according to some embodiments of the present disclosure.

FIG. 7 depicts a sensor graph constructed using data points (in use case) relationships and dependencies to represent heavy rainfall and farm inundation as possible events.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As used herein the term 'sensor graph' refers to a comprehensive connected representation of a plurality of data points of the agricultural data captured by one or more sensors, whereon each data point along with one or more relevant environmental factors of the agricultural data represents one or more modes of the graph. Further, connection between the one or more nodes represent relationships or dependencies between the one or more sensors.

As used herein the term 'knowledge graph' refers to a graphical form of a query formulated on the basis of a corpus of agricultural data available as one or more knowledgebase. The graphical form of a query is formulated by one or more natural language processing (NLP) techniques.

As used herein the term 'possible event' refers to one or more detected event based on a plurality of agricultural data collected from a geocoded farm, as well as one or more predicted event based on analyzing the plurality of agricultural data collected from the geocoded farm using one or more prediction tools.

As used herein the term 'agricultural data' and 'sensor(s) data' are used interchangeably throughout the specification and refers to a corpus of data collected from one or more sensors on the farm (e.g., that provide information associated with sap flow, imaging, weather, etc.), as well as one or more external sources (e.g., weather forecasts, soil type data, market data, etc.).

As used herein the term the term 'sensor(s)' include IoT sensors as well as sensors of sensor-based devices and refers to an object that changes its state as a function of some predetermined occurrence. The farm-based sensor devices may include cameras, multispectral sensors, sap flow sensors, temperature sensors, soil temperature sensors, ground based or flying drones that gather image data, and/or any other type of sensor device that may aid a farmer in determining how the farmer's crops are doing at any given time.

As used herein the term 'multi-contextual intelligent query' refers to one or more relevant query extracted from the graph queries database (DB) in response based on similarity matching with the sensor graph.

As used herein the term 'refined multi-contextual intelligent query' refers to the multi-contextual intelligent query advanced by one or more weighted principles of communication, and an event specific domain-based vocabulary.

In the precision agriculture, edge devices based on IoT principles and sensor-based devices plays a great role in smart farm management. To utilize domain knowledge for farm management, the farm level edge devices must remain in touch with remote server's knowledge graph, which is easier to update regularly. Such communication setup has two types of the agents: (a) A farm agent: A program installed in one or more farm equipments like rover on the farm that asks a query or instruction driven by principles of communication, to the remote entity, and (b) A cloud agent 116A: A program located on remote server and is supported by the multi-modals models such as Large Language Models (LLM) and Large Vision Model (LVM s). The LLMs, and the LVMs receives local context of the farm agent and generate a set of recommendations. The cloud agent 116A knows the local context of the farm agent and has the real-time update on changing dynamics regarding the global environment and related conditions to make the set of recommendations.

It is assumed that a rover in the farm has a good knowledge of the context in which it operates and this knowledge, with its capability, helps it to generate queries with respect to the context of its operations. This contextual knowledge along with sensing capabilities are used by the agent to perform its regular tasks related to farm operations. While formulating the query for the cloud agent 116A, the farm agent must consider the following criteria: (a) Purpose: The farm agent must understand the type of events, that is if certain event has occurred (also called as an identified event), then what kind of actions does it usually perform based on its contextual (and historical) knowledge. It is also important to analyse with the cloud agent 116A to see, if there are additional context to this event considering some global change which the local farm agent may not be aware of and depending on that response or instruction then farm agent can do things differently. (b) Reaction Time: This identified event may have the heightened risk of potentially causing catastrophic damage to the farm crop within a short timeframe, and hence the farm agent must send an optimized query (with the current status) to the cloud agent 116A to save time and energy by sending a query explaining the event and learn if it needs to do anything differently. (c) Situational Limitations or resource constraints: Given the unique precarious situation in which the farm agent operators such as running out of battery (energy) in the face of the identified event, it must formulate the query with an appropriate tone and temper (so that along with responding to its query, the cloud agent 116A also senses the urgency and alert others who can help navigate the identified event.

In the present disclosure, a method and a system for the automated farm management by utilizing connected graphs to navigate through future events affecting the farm are presented. The disclosed technical approach for the automated farm management involves detecting and predicting future events in the farms (an agricultural field) by utilizing a plurality of relevant data gathered through one or more IoT sensors and sensor-based devices. The relevant data is converted into graphical form using NLP techniques to derive multi-contextual intelligent query. The multi-contextual intelligent query is refined by using domain knowledge and weighted principles of communications. The refined multi-contextual intelligent query is provided to a remotely located LLM model to generate a set of recommendations. The most suitable recommendation is transmitted to an associated autonomous farm equipment to take suitable action. The system is also supported by a feedback mechanism to improve future query generation.

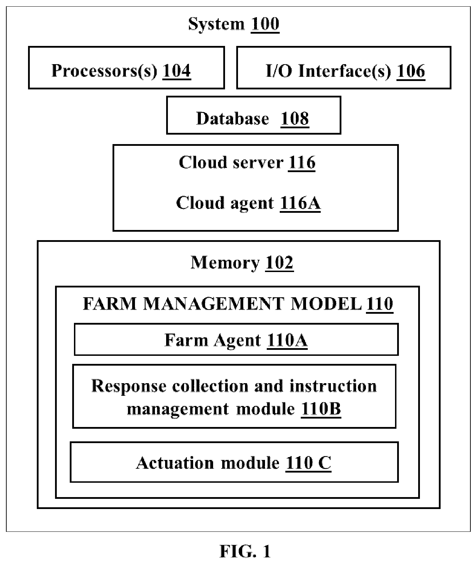

Referring now to the drawings, and more particularly to FIG. 1 through FIG. 7, where similar reference characters denote corresponding features consistently throughout the figures, there are shown preferred embodiments, and these embodiments are described in the context of the following exemplary system and/or method.

FIG. 1 illustrates an exemplary block diagram of a system 100 for automated farm management by utilizing connected graphs to navigate through future events affecting the farm, according to some embodiments of the present disclosure.

In an embodiment, the system 100 includes one or more processors 104, communication interface device(s) or input/output (I/O) interface(s) 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, system 100 can be implemented in a variety of computing systems, such as, laptop computers, notebooks, hand-held devices, workstations, mainframe computers, servers, a network cloud, and the like. The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) 106 can include one or more ports for connecting a number of devices such as the user terminals enabling user to communicate with system via the chat bot UI or enabling devices to connect with one another or to another server. The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

In an embodiment, memory 102 may include a database or repository. Memory 102 may comprise information pertaining to input(s)/output(s) of each step performed by the processor(s) 104 of the system 100 and methods of the present disclosure. In an embodiment, the database may be external (not shown) to the system 100 and coupled via the I/O interface 106. The memory 102 includes a farm management model 110. The farm management model 110 performs automated farm management by utilizing connected graphs to navigate through future events affecting the farm. The farm management model 110 comprises a farm agent module 110A, a response collection and instruction management module 110B and an actuation module 110C. The farm agent module 110A gathers a plurality of sensor data involving data from IoT sensors and from sensor-based devices relevant in the farm scenario. Based on data gathered, the detected/predicted event along with all the relevant data of the field is arranged in a graphical form to obtain a sensor graph. The sensor graph represents a query (or queries) generated by a graph neural network (GNN) model. The farm agent module 110A also communicates with a graph queries database (DB) comprising the plurality of knowledge graphs. The graph queries database (DB) comprises existing multi-dimensional agricultural knowledge from different sources in the form of form of queries (millions of queries) and each query is stored as knowledge graphs (i.e., graphical form of query). The sensor graph is provided to a pre-trained Natural Language Processing (NLP) model to extract one or more knowledge graphs from the graph queries database matching the sensor graph of the at least one predicted/detected event. The one or more knowledge graphs extracted represents a set of multi-contextual intelligent queries. The set of multi-contextual intelligent queries are combined with weighted principles of communications and event specific domain-based vocabulary to generate a set of refined multi-contextual intelligent queries. Each refined multi-contextual intelligent query is ranked using one or more ranking algorithms and arranged in a sequence forming the set of refined multi-contextual intelligent queries. The set of refined multi-contextual intelligent queries comprises sequentially arranged refined multi-contextual intelligent queries based on assigned ranks.

The farm agent module 110A further communicates to a cloud agent 116A, a remote entity situated on a cloud server. The cloud agent 116A processes the set of refined multi-contextual intelligent query to generate set of recommendations as a response to the query triggered by the farm agent 110A. The farm agent 110A sends the set of refined multi-contextual intelligent queries autonomously to a large language model (LLM) model to generate the set of recommendations. The generated set of recommendations are passed on to a response collection and instruction management module 110B that converts the set of recommendations to a set of actionable instructions to be performed on the farm. The set of actionable instructions are further transmitted to a actuation module 110C configured in the one or more autonomous equipment in the farm to execute a relevant action.

The memory 102 further includes a plurality of modules (not shown here) comprises programs or coded instructions that supplement applications or functions performed by the system 100 for executing different steps involved in the data rate prediction and prioritization. The plurality of modules, amongst other things, can include routines, programs, objects, components, and data structures, which perform particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by one or more hardware processors 104, or by a combination thereof. The plurality of modules can include various sub-modules (not shown).

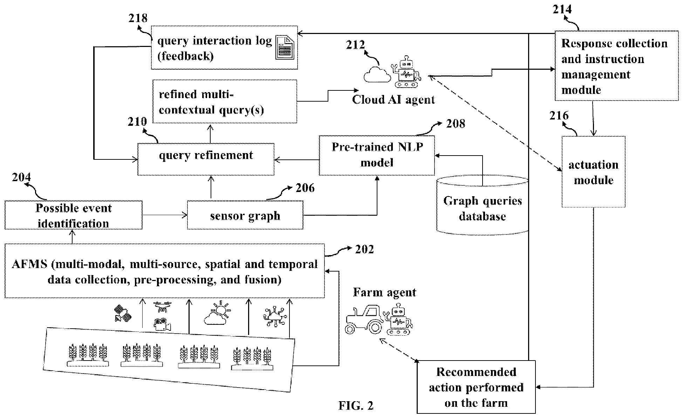

FIG. 2 illustrates an overall framework for the automated farm management involving future event prediction, query generation, response generation, and transmission of generated responses to autonomous farm equipments, according to some embodiments of the present disclosure.

Referring to FIG. 2, there is shown a scenario wherein a geocoded farm is monitored and managed by using remote Sensing, IoT, and crowdsensing that involves using a plurality of applications to detect and predict one or more events based on a plurality of agricultural data collected while monitoring. At 202, the plurality of agricultural data is collected via automatic farm monitoring system (AFMS) connected to the farm through a plurality of devices that collects a temporal data and a spatial data at periodic intervals. The AFMS senses the plurality of agricultural data about the field by all possible direct or indirect means such as remote sensing, IoT, crowdsensing, various modelled outputs and one or more autonomous vehicles. The AFMS communicates through the farm agent 110A to leverage a comprehensive network of sensors and a contextual knowledge to optimize one or more farm operations. The farm agent110A analyses the plurality of agricultural data to identify (detect/predict) one or more possible events. At 204, one or more possible events based on the plurality of agricultural data captured from the one or more sensors is identified. Based on all or part of the plurality of agricultural data (or information/models) the farm agent identifies (detects/predicts) at least one possible event over that agricultural farm that needs to be flagged. The possible event like prediction of heavy rainfall could lead to different impacting situations or events, such as flooding (farm inundation) for several days, and/or crop loss, or heightened risk of crop diseases. At 206, the one or more possible events captured from the one or more sensors are fused together to generate a sensor graph. The sensor graph represents the at least one possible event that needs to be flagged. The sensor graph is generated by the GNN model combining the at least one possible event and at least one associated data point. The at least one associated data point from the plurality of agricultural data is relevant to the at least one possible event. The at least one associated data point is converted into a graphical form (i.e., sensor graph) using GNN model with standardized graph queries derived from knowledge of crops, fields, climate, etc.

At 208, the sensor graph is provided to the pre-trained NLP model to extract one or more knowledge graphs from a plurality of knowledge graphs matching the sensor graph of the at least one possible event, wherein the plurality of knowledge graphs are stored in a graph queries database (DB), and wherein the one or more knowledge graphs from the plurality of knowledge graphs matching the sensor graph represents a set of multi-contextual intelligent queries. The pre-trained NLP model extracts relevant multi-contextual intelligent queries matching the at least one possible event. The motivation for the farm agent to ask queries lies in unexpected events that may require changes in responses due to global factors that the agent is unaware of. Query considerations include purpose, reaction time, and situational limitations when formulating queries. At 210, the set of multi-contextual intelligent queries is refined by providing one or more weighted principles of communications, and one or more possible event specific domain-based vocabulary to the set of multi-contextual intelligent queries. The principles of communication play a role in structuring the multi-contextual intelligent queries for consistency, correctness, completeness, specificity, urgency, and courtesy. The farm agent formulates the multi-contextual intelligent queries based on the possible event, urgency levels, and the agent's vital parameters.

While preparing the set of refined multi-contextual intelligent queries, one or more ranking algorithms are utilized in ranking each refined multi-contextual intelligent query within the set of refined multi-contextual intelligent queries. At 212, the set of refined multi-contextual intelligent queries are sent to a cloud agent 116A located at the remote server. The cloud agent processes the set of refined multi-contextual intelligent query to generate set of recommendations as a response to the query triggered by the farm agent. The cloud agent 116A is equipped with the LLM model sequentially processes each refined multi-contextual query and generates a relevant response against each refined multi-contextual query. The LLM model identifies a context from each refined multi-contextual query to trigger a relevant response. At 214, the set of recommendations in the form of relevant responses are processed at a response generator module. The response generator module recommends at least one actionable instruction from a set of actionable instructions to be performed in the farm in response to the at least one possible event, wherein the set of actionable instructions to be performed in the farm are obtained by processing a pair of the sequentially processed multi-contextual query and the relevant response using a pre-defined rules. At 216, the at least one actionable instruction is transmitted to one or more farm machineries as a response to the at least one possible event via actuation module. The farm agent is configured at the farm in one or more autonomous equipments or in relevant location that are meant to perform one or more action in response to the at least one actionable instruction transmitted. At 218, a query interaction log (feedback) is maintained that receives one or more feedback from the one or more farm machineries to check the accuracy of the at least one actionable instruction transmitted in response to the at least one possible event. The feedback is utilized for generation of a next set of multi-contextual intelligent queries in response to one or more next possible events.

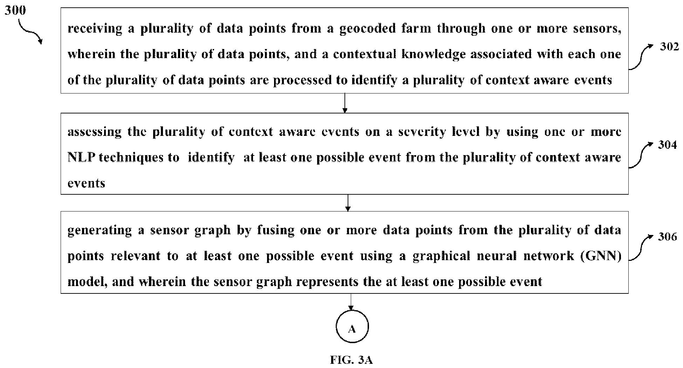

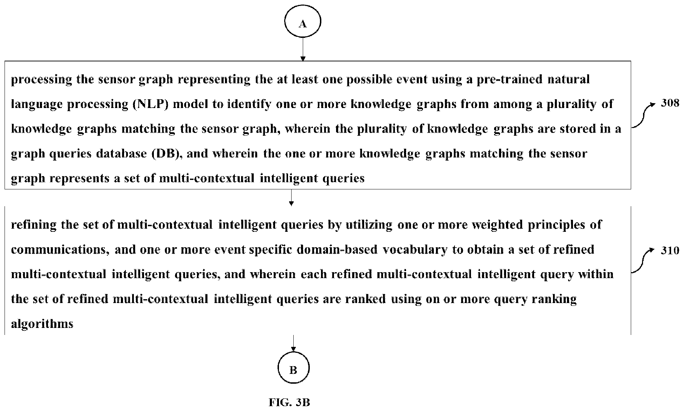

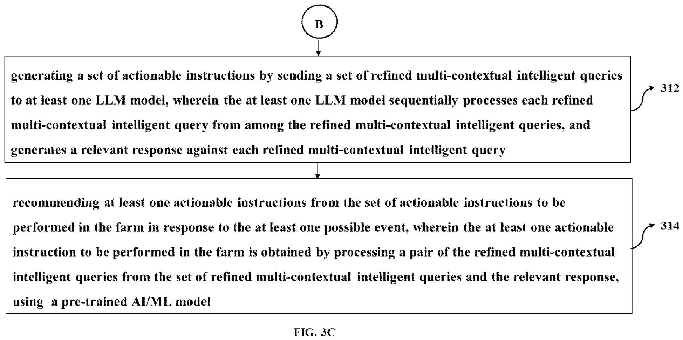

FIGS. 3A, 3B and 3C depict flow diagrams of an illustrative method for the automated farm management by utilizing connected graphs to navigate through future events affecting the farm, using the system of FIG. 1, according to some embodiments of the present disclosure.

The steps of method 300 of the present disclosure will now be explained with reference to the components or blocks of the system 100 as depicted in FIG. 1 through FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously. The farm management model 110 is a combination of the farm agent 110A and the cloud agent 116A that provide the automated system for intelligent query generation using graph-based events, weighted principles of communications, and an autonomous event-driven precision agriculture system. The method focuses on optimizing query quality through intelligent prompts and enhancing communication efficiency in agriculture. The method leverages data from various sources to predict and detect events on the farm without physical inspection, generating intelligent queries using principles of communication and machine intelligence for LLM responses. The focus is on improving query quality, aligning queries with events and communication principles, and enhancing communication efficiency in dynamic environments.

At step 302 of the method 300, the one or more hardware processors 104 are configured to receive a plurality of data points from a geocoded farm through one or more sensors, wherein the plurality of data points, and a contextual knowledge associated with each one of the plurality of data points are processed to identity a plurality of context aware events. The plurality of data points are one or more agricultural data gathered from a geocoded farm comprises of the one or more data points collected from one or more sensors. The one or more sensors include a plurality of IoT sensors, one or more sensor-based devices installed in the farm or on the autonomous farm equipments, and other sensors involved in data capture and generation. The plurality of data points encompasses one or more events in the farm scenario. The one or more events are relevant to the agricultural farm scenario. The one or more data points may explicitly indicate the one or more event or the one or more data points when combined with each other may indicate the one or more event. Collection of the plurality of data points is executed by an automatic farm monitoring system (AFMS). The AFMS is connected to the agricultural farm through a collection of devices that collects temporal and spatial data at periodic intervals. The AFMS senses the plurality of agricultural data about the farm one or more direct and indirect means such as remote sensing, IoT, crowdsensing, various modelled outputs, and from one or more autonomous equipments/ vehicles. The AFMS communicates through a farm agent to leverage a comprehensive network of sensors and a contextual knowledge to optimize one or more farm operations.

At step 304 of the method 300, the one or more hardware processors 104 are configured to assess the plurality of context aware events on a severity level by using one or more NLP techniques to identify at least one possible event from the plurality of context aware events. The farm agent 110A utilizes one or more NLP techniques to assess the plurality of context aware events identified from the plurality of data points. The assessment is based on understanding the severity level associated with each context aware event. Each context aware event is an unplanned/ sudden event detected at the farm level. These unplanned/ sudden event may have an adverse impact to one or more crops, one or more farm machineries or one or more tasks relevant to the farm scenario. The adverse impact may be associated with a magnitude defining the severity level. The farm agent 110A assesses an urgency associated with each context aware event as well as an intensity associated with each context aware event to derive the magnitude of the severity level. Based on the severity level, the at least one possible event from the plurality of context aware events is identified and prioritized to be addressed. The farm agent 110A analyses the plurality of agricultural data collected as one or more data points in the form of an information or as a modeled output to identify the one or more possible events. Based on all or part of the agricultural data (or information/models) the farm agent 110A identifies the at least one possible event over that agricultural farm that needs to be flagged. The possible event may be a detected event or a predicted event. The detected event is the one that has already happened and explicitly indicated through the plurality of agricultural data. The predicted event is the one that is estimated using one or more ancillary hardware or devices or through an artificial intelligence/ machine learning (AI/ML) models. E.g., crabs or snakes coming out of the farm because of heavy rainfall is the detected event as captured as a camera output. However, a potential risk of new types of diseases due to the heavy rainfall, as well as one or more associated micro-climatic conditions thereafter are the predicted events. Therefore, the one or more possible events comprising the detected event or the predicted event are analysed by the farm agent 110A based on the one or more data points.

At step 306 of the method 300, the one or more hardware processors 104 are configured to generate a sensor graph by fusing one or more data points from the plurality of data points relevant to at least one possible event using a graphical neural network (GNN) model. The sensor graph represents the at least one possible event. The sensor graph comprises of a plurality of interconnected nodes, where each node represents the at least one data point from the plurality of data points. Upon identifying the at least one possible event, the farm agent 110A gathers the one or more data points from the plurality of data points relevant to at least one possible event. The farm agent 110A automatically triggers a process of constructing a comprehensive connected graph called "sensor graph" using the GNN model. The relevant data points with respect to each possible event are provided to the GNN model. The GNN belongs to a class of artificial neural networks for processing data that can be represented as graphs. The GNN utilizes the data points associated with each possible event and generates the sensor graph by fusing the data points. In the sensor graph, each data point belong to a sensor type (temperature, humidity, etc.) or to relevant environmental factors (e.g., soil conditions, plant health) that are represented as nodes. Connections between nodes represent relationships or dependencies between different sensor readings. For instance, rainfall may directly affect soil moisture, which in turn influences plant health. Edges could be weighted based on the strength of relationships, such as the correlation between rainfall and soil moisture levels. Since the one or more data points collected from the one or more sensors data represents a time-series, so, a dynamic graph approach is used where the graph evolves over time as new data is ingested.

The sensor graph is a connected graph and is obtained by converting the one or more data points of the plurality of agricultural data collected from the one or more sensors including images, into a connected graphical form. The process of obtaining the sensor graph begins with gathering and pre-processing the one or more data points from different sensors such as precipitation, humidity, and temperature, along with the image sensor capturing farm visuals. The sensor graph construction using the GNN involves text processing, entity recognition, entity linking, relation extraction, knowledge representation, graph construction, and storage. For numerical sensors, this involves aggregating their data at specific points in time. For the image data, computer vision techniques like GNN are used to extract relevant features such as plant health, soil conditions, or leaf color. These extracted features, alongside one or more raw sensor values, form the basis for constructing nodes in the graph. Each data point (e.g., precipitation, humidity, temperature) is treated as a node, and additional nodes are created for key features derived from image analysis (e.g., NDVI values for vegetation health or soil moisture levels). These nodes are then connected by edges that represent relationships or dependencies between the sensor readings. Mathematically, the process of converting the one or more data points from sensor data into a connected graphical form (the sensor graph) involves the following steps:

(a). Preprocessing of data points representing sensor data

Let the sensors provide time-series data $S_i(t)$, where $i$ represents a sensor type (e.g., precipitation, humidity, temperature) and $t$ is the time.

For each sensor:

Precipitation sensor outputs a value $P(t)$
Humidity sensor outputs $H(t)$
Temperature sensor outputs $T(t)$
The sensor data is aggregated or smoothed at a specific time point $t_0$ as:

$$S_i(t_0) = aggregated\ value\ of\ sensor\ i\ at\ time\ t_0 \quad (1)$$

For example:

$$P(t_0) = 10\ mm,\ H(t_0) = 75\ \%,\ T(t_0) = 25^o\ C \qquad (1)$$

For image sensors, which produce farm visuals, image processing techniques (e.g., Convolutional Neural Networks, or CNNs) extract relevant features like vegetation indices:

NDVI (Normalized Difference Vegetation Index) from the image sensor at time t0:

$$NDVI(t_0) = f(image\ data\ at\ t_0) \qquad (2)$$

where $f$ represents the feature extraction function using CNN.

(b) Graph Representation

The data points and extracted image features form the nodes of the graph. Define the graph *G* = *(V, E),* where:

Vis the set of nodes {$v_1$, $v_2$, $v_3$, ... $v_n$}, representing the sensor types and extracted features.
*E* is the set of edges {$e_{ij}$}, which represent the relationships between sensors and features.

(c) Nodes:
Each sensor or feature becomes a node in the sensor graph:

Precipitation node: $V_P$
Humidity node: $V_H$
Temperature node: $V_T$
NDVI node (from image processing): $V_{NDVI}$
Thus, the node set becomes:

$$V = \{V_P, V_H, V_T, V_{NDVI}\} \tag{3}$$

(d) Edges and Weights:

Edges $e_{ij}$ represent relationships or dependencies between the nodes. The strength of the relationship is represented by a weight $W_{ij}$ assigned to each edge. These weights can be determined using correlation or machine learning techniques (e.g., regression analysis) that quantify how much one sensor's value impacts another.
For example, if precipitation and soil moisture have a strong correlation:

$$W_{P,NDVI} = 0.8 \, (strong \; relationship)$$

and if temperature and NDVI have a moderate relationship:

$$W_{T,NDVI} = 0.5 \, (moderate \; relationship)$$

Thus, the edges set Eis:

$$E = \{(V_P, V_{NDVI}), (V_H, V_{NDVI}), (V_T, V_{NDVI})\} \tag{4}$$

Each edge $e_{ij}$ *can be mathematically expressed as:*

$$e_{ij} = (V_i, V_j, W_{ij}) \tag{5}$$

Final Graph Representation
The sensor graph *G* with nodes V and edges *Eis constructed as:*

$$G = (V, E) = \left\{(V_P, V_H, V_T, V_{NDVI}), \{e_{P,NDVI}, e_{T,NDVI}, e_{H,NDVI}\}\right\} \tag{6}$$

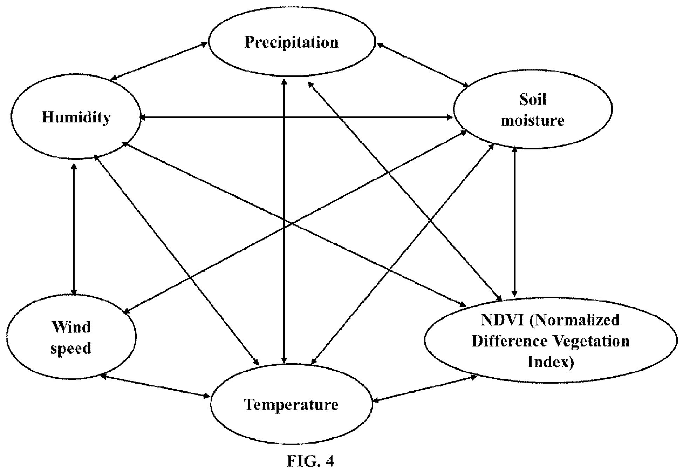

where each edge $e_{ij}$ *has a weight Wij* representing the strength of the relationship between two nodes. The sensor graph is represented as given in FIG. 4.
At step 308 of the method 300, the one or more hardware processors 104 are configured to process the sensor graph representing the at least one possible event using a pre-trained natural language processing (NLP) model to identify one or more knowledge graphs from among a plurality of knowledge graphs matching the sensor graph, wherein the plurality of knowledge graphs are stored in a graph queries database (DB), and wherein the one or more knowledge graphs matching the sensor graph represents a set of multi-contextual intelligent queries. The graph queries DB is derived from all the associated knowledge of the crops, field, region, climate, soil etc. The associated knowledge gathered from literature references (book, journals, papers, publications etc.) are converted into a plurality of knowledge graphs, and one or more graph permutations are performed to generate multiple queries that align with the at least one possible event data represented by the sensor graph. The graph queries DB comprises a plurality of relevant farming information, and wherein the plurality of relevant farming information comprises an associated knowledge of one or more crops, one or more recommended agronomy practices, one or more fields, one or more region, climate type and soil type.

Once the at least one possible event is triggered, the sensor graph is fed into the pre-trained NLP model. The pre-trained NLP model compares the sensor graph with the graph representations of the queries it has learned from. It identifies patterns, subgraphs, or structural similarities and generates the set of relevant queries based on these matches. For example, if the sensor graph indicates a sharp increase in soil moisture due to heavy rainfall, the model might generate queries like "Will the crop roots be affected by waterlogging?" or "What are the best drainage solutions for this condition?"

The process described above can be represented mathematically as follows:

Let $E$ represent the event that triggers the process, such as heavy rainfall.
Let $S$ represent the sensor data collected over time.
The sensor graph $G_s$ is generated based on the sensor data $S$ when the event Eoccurs:

$$G_s = f(S, E) \qquad (6)$$

where $f$ is a function that creates the sensor graph $G_s$ using the sensor data Sand the event E.
Further,
Let M represent the pre-trained NLP model that has learned from a set of query graphs $G_q$ (i.e., the knowledge graphs)

The model compares the sensor graph $G_s$ with its learned query graphs $G_q$ to identify matching patterns or subgraphs. This can be expressed as:

$$M(G_s) = \{q_i \mid similarity\,(G_s) \geq \tau \mid\} \qquad (7)$$

where $q_i$ is a query associated with the sensor graph and $\tau$ is a threshold for structural similarity. The function similarity $(G_s)$ measures the similarity between the sensor graph and the plurality of knowledge graphs learned during similarity match.

Later, based on the identified matches, the model generates a set of relevant queries Q :

$$Q = \{q_i\}_{i=1}^n \qquad (8)$$

where Qis the set of relevant queries generated, and $q_i$ are individual queries such as "Will the crop roots be affected by waterlogging?" or "What are the best drainage solutions for this condition?"

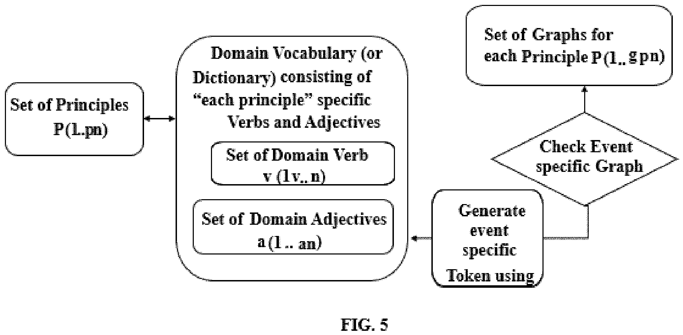

At step 310 of the method 300, the one or more hardware processors 104 are configured to refine the set of multi-contextual intelligent queries by utilizing one or more weighted principles of communications, and one or more event specific domain-based vocabulary to obtain a set of refined multi-contextual intelligent queries, and wherein each refined multi-contextual intelligent query within the set of refined multi-contextual intelligent queries are ranked using on or more query ranking algorithms. The refinement and ranking process majorly involves three steps, (i) feature extraction, (ii) principle specific scoring, and (iii) weight assignment. The feature extraction from each multi-contextual intelligent queries involves understanding a key concept and extracting one or more features like sentence structure, word count, and accordingly assigning a readability score to each extracted feature. The principle specific scoring of each multi-contextual intelligent query involves assessment based on one or more principle of communication like (a) Clarity (CL), (b) Relevance (R), (c) Conciseness (CO), (d) Specificity (SP), and (e) Accuracy (AC). And the weight assignment post principle specific scoring involves adjusting one or more weights assigned to each principle of communication to fine-tune the query refinement process. The query refinement using the principles of communication is represented in the FIG. 5. For example, a generated query like "How will the high soil moisture after the recent heavy rain affect plant health?" can be refined by first identifying key concepts such as "soil moisture," "heavy rain," and "plant health." By cross-referencing these with an agricultural vocabulary database, more precise terms can be identified, such as "crop root integrity" or "risk of fungal diseases," which replace the generic "plant health." Additionally, applying weighted communication principles automatically ensures the refined query is clear, concise, and focused. Certain steps participate in automatic weight assignment to the principles of communication. Each multi-contextual intelligent query from the set of multi-contextual intelligent queries is split into a plurality of measurable components, and one or more weights are assigned to each measurable component of the plurality of measurable components. The weight assignment utilizes the one or more communication principles like clarity, relevance, conciseness, specificity, and accuracy. Each refined multi-contextual query from the set of refined multi-contextual queries are further ranked using one or more query ranking algorithms that identifies a context from the at least one identified event and evaluates a relevance of each refined multi-contextual query, wherein the refined multi-contextual query with a highest query score is provided to the LLM model for generating the set of responses, and a remaining set of refined multi-contextual queries from the set of refined multi-contextual queries are combined to form a single nested query without losing the context.

To mathematical representation of the query refinement process comprises:

STEP 1: FEATURE EXTRACTION

Let the input relevant query Qbe represented as a sequence of words:

$$Q = \{w_1, w_1, \dots w_n\} \qquad (9)$$

where $w_i$ are the individual words in the relevant query.
Using NLP techniques, we identify key concepts $C$ from the relevant query:

$$C = (c_1, c_2, \dots \dots c_n) \qquad (10)$$

For example, in the query "How will the high soil moisture after the recent heavy rain affect plant health?", the key concepts identified are:

$$C = \{\text{soil moisture, heavy rain, plant health}\} \qquad (11)$$

features such as sentence structure (complexity), word count, and readability score are also extracted using feature extraction functions like:

- $f_{sc}(Q)$: Sentence complexity (e.g., the number of clauses or sentence depth).
- $f_{wc}(Q)$: Word count of the query.
- $f_{rc}(Q)$: Readability score (e.g., Flesch-Kincaid score).

Thus, the extracted features for the query is represented as a feature vector $F$:

$$F(Q) = [f_{sc}(Q), f_{wc}(Q), f_{rc}(Q), \dots \dots \dots ..] \quad (12)$$

STEP 2: PRINCIPLE-SPECIFIC SCORING

For each communication principle, the relevant query is evaluated based on measurable components:

a. Clarity (CL)

The clarity score $S_{CL}$ can be a function of sentence complexity and readability:

$$S_{CL} = f_{cl}(f_{sc}(Q), f_{rs}(Q)) \qquad (13)$$

A lower sentence complexity and higher readability score lead to a higher clarity score.

b. Relevance (R)
The relevance score $S_R$ depends on how well the key concepts Cmatch with terms in a specialized agricultural vocabulary V :

$$S_R = f_{rel}(C, V) \qquad (14)$$

where $f_{rel}(C, V)$ checks for matches between key concepts Cand vocabulary terms V. Higher matches result in a higher relevance score.
c. Conciseness (CO)

Conciseness $S_{co}$ is inversely related to the word count $f_{wc}(Q)$and sentence complexity:

$$S_{CO} = f_{concise}(f_{wc}(Q), f_{sc}(Q)) \qquad (15)$$

Shorter queries with simpler structure yield higher conciseness scores.

d. Specificity (SP)

Specificity $S_{SP}$ is evaluated by comparing the level of detail in the relevant query. If more precise terms replace general terms (e.g., "fungal disease" instead of "plant health"), specificity increases:

$$S_{SP} = f_{spec}(C, V) \qquad (16)$$

where $f_{spec}(C, V)$ checks for detailed, domain-specific terms in the query.

e. Accuracy (AC)

Accuracy $S_{AC}$ is scored by validating the scientific correctness of the terms used:

$$S_{AC} = f_{acc}(C, K) \qquad (17)$$

where K is a trusted knowledge base of correct agricultural terminology.

Accurate use of terms yields a higher score.

Thus, the overall principle-specific score of the query can be represented as a vector:

$$S(Q) = [S_{CL}, S_R, S_{CO}, S_{SP}, S_{AC}, ..., S_{pcn}] \qquad (18)$$

Where for n number of principles, $S_{CL}$ represents a clarity score, $S_R$ represents a relevance score, $S_{CO}$ represents conciseness, $S_{SP}$ represents specificity, and $S_{AC}$ represents an accuracy, and $S_{pcn}$ represents nth principle.

STEP 3: AUTOMATIC WEIGHT ASSIGNMENT

Once the query is evaluated, the system assigns weights $W$ to each principle. Let:

$$W = [w_{CL}, w_R, w_{CO}, w_{SP}, w_{AC}] \qquad (19)$$

where each $w_i \in [0,1]$ is a weight assigned to the corresponding principle.

Weights are dynamically adjusted based on the characteristics of the query. For example, if $S_{sp}$ (specificity score) is low due to vague terms like "plant health," the system increases the weight $w_{sp}$ to encourage refinement:

$$w_{sp} = f_{adjust}(S_{sp}) \qquad (20)$$

Similarly, if the query is already concise, the weight $w_{co}$ for conciseness might be reduced:

$$w_{co} = f_{adjust}(S_{so}) \qquad (21)$$

The overall weighted score $W_s$ for the query is computed as:

$$W_s = w_{CL}S_{CL} + w_R S_R + w_{CO}S_{CO} + w_{SP}S_{SP} + w_{AC}S_{AC} \qquad (22)$$

The overall weighted score helps refine the query. By adhering to the core principles of communication and utilizing the agent's core competence, the system 100 becomes dynamic and adaptable to various scenarios. The query generation is happening at the edge (through the farm agent) based on its interaction with its environment (i.e., the farm scenario). The goal is to ensure that queries generated are relevant, impactful, and address the key components of the scenario (event) at hand of the system.

Each refined multi-contextual intelligent query from the set of refined multi-contextual intelligent queries is ranked using the one or more query ranking algorithms that identify a context from the at least one identified event and evaluates a relevance of each refined multi-contextual intelligent query, wherein the refined multi-contextual intelligent query with a highest query score is provided to a LLM model for generating the set of responses, and a remaining set of refined multi-contextual intelligent queries from the set of refined multi-contextual intelligent queries are combined to form a single nested query without losing the context.

Following steps participate in query ranking:

(a) Define the Context:
Example: A farm has a rice crop, and a heavy rainfall event has occurred.
(b) Evaluate each multi-contextual intelligent query based on context

- Significance to crop type: Is the multi-contextual intelligent query more relevant to rice, a water-tolerant crop, or another crop like wheat, which is more sensitive to excess rainfall?
- Impact of Heavy Rainfall: Does the multi-contextual intelligent query address the specific consequences of heavy rainfall on the crop?
- Practicality: Is the multi-contextual intelligent query useful or actionable in the given context?

(c) Assign scores based on context:
Assign scores (1-5) for each multi-contextual intelligent query, with 5 being highly significant to the context (wheat damage + heavy rainfall), and 1 being less significant (e.g., rice).

Mathematically, the process of ranking the multi-contextual intelligent queries is based on the context by defining a contextual significance score for each few multi-contextual intelligent query. This score is determined by assigning weights to the various factors (significance to crop type, impact of rainfall, and practicality) and then calculating the weighted sum for each few multi-contextual intelligent query.

Contextual significance score calculation can be defined mathematically as: Suppose, we have a set of refined multi-contextual intelligent queries $Q_1$, $Q_2$, $Q_3$ ... ... .$Q_n$. Now, we can evaluate each refined multi-contextual intelligent query on several criteria. Let:

$R_c(Q_i)$ = Significance to context for refined multi-contextual intelligent query $Q_i$ (e.g., relevance to crop type, condition, event).

$I(Q_i)$ = Impact of the event for refined multi-contextual intelligent query $Q_i$ (e.g., how well the multi-contextual intelligent query addresses the event's impact, such as heavy rainfall).

$P(Q_i)$ = Practicality for refined multi-contextual intelligent query $Q_i$ (e.g., the usefulness or applicability of the refined multi-contextual intelligent query to solve a problem).

Each criterion $R_c(Q_i)$, $I(Q_i)$, $P(Q_i)$ is scored on a scale (from 1 to 5).

Now, assign weights to each of these factors based on the importance of each criterion in the given context. Let:

- $w_c$ = weight for significance to context.

- $w_i$ = weight for impact of the event.

- $w_{pw}$ = weight for practicality.

- $w_e$ = weight for other factors.

The weights should sum to 1:

$$w_c + w_i + w_{pw} + w_e = 1 \qquad (23)$$

The contextual significance score $S(Q_i)$ for each refined multi-contextual intelligent query $Q_i$ is given by the weighted sum of the criteria:

$$S(Q_i) = w_c.R_c(Q_i) + w_i.I(Q_i) + w_P.P(Q_i) + w_e.E(Q_i) \qquad (24)$$

Where:

- $R_c(Q_i)$, $I(Q_i)$, $P(Q_i)$, $E(Q_i)$ are the scores for significance, impact, practicality, and other factors, respectively.
- $w_c$, $w_i$, $w_p$, and $w_e$ are the weights assigned to each criterion.

After calculating $S(Q_i)$ for the set of refined multi-contextual intelligent queries $Q_1, Q_2, ... ... Q_n$ each multi-contextual intelligent query is ranked in descending order of their scores. The refined multi-contextual intelligent query with the highest score is the most contextually relevant.
Generalized formula:

$$S(Q_i) \; = \; w_c.R_c(Q_i) \; + \; w_i.I(Q_i) \; + \; w_p.P(Q_i) \; + \; ..... \; + \; w_k.C_k(Q_i) \qquad (25)$$

*Where*

- $S(Q_i)$ = Contextual significance score of the refined multi-contextual intelligent query $Q_i$
- $w_k$ = weight for the $k^{th}$ criterion. You may write as $k^{th}$.
- $C_k(Q_i)$= score of the $k^{th}$ criterion for multi-contextual intelligent query $Q_i$.

This formula allows for any number of criteria and corresponding weights, making it adaptable to different contexts and scenarios.

At step 312 of the method 300, the one or more hardware processors 104 are configured to generate a set of actionable instructions by sending a set of refined multi-contextual intelligent queries to at least one LLM model, wherein the at least one LLM model sequentially processes each refined multi-contextual intelligent query from among the refined multi-contextual intelligent queries and generates a relevant response against each refined multi-contextual intelligent query. The LLM model is located at a remote server. This remotely located functionality is called a cloud agent 116A and communicates with the farm agent 110A. The farm agent 110A sends queries like "What is the risk of fungal disease in crop roots due to elevated soil moisture after heavy rainfall?" to the cloud agent 116A by leveraging an application programming interface (API) integration. Once the set of refined multi-contextual intelligent queries are generated based on the sensor data and the NLP processing, the farm agent 110A transmits it through an API call to the LLM model. The LLM model then processes each refined multi-contextual intelligent query sequentially and generates the relevant response against each multi-contextual intelligent query, which is returned to the farm agent. The sequential processing is as per the ranks assigned to each refined multi-contextual intelligent query in the previous steps. The process can be mathematically represented as:

Let Grepresent the GPT model accessed via an API.

For each query $q_i$ in the set $\{q_i\}$, the GPT response $r_i$ is obtained by:

$$r_i \; = \; G(q_i) \qquad (26)$$

where $G$ is the function that takes a query $q_i$ and generates a response $r_i$.

The farm agent processes each query $q_i$ sequentially, so the entire process for all queries is represented as:

$$\{r_i\} \; = \; \{G(q_i)\} \, for \, each \, q_i \, \in \, \{q_i\} \qquad (27)$$

Where $\{r_i\}$ is the set of responses corresponding to the set of queries $\{q_i\}$

The set of responses $\{r_i\}$ is returned to the farm agent 110A for further action or presentation. There will be a situation where the farm agent 110A is equipped with low battery power. In that case, the farm agent 110A is able to send a few multi-contextual intelligent queries (for example- 2 queries out of 10 generated queries) to the cloud agent 116A. In that case, the farm agent 110A sends only those refined multi-contextual intelligent queries from the set of refined multi-contextual intelligent queries that are ranked high based on one or more query ranking algorithms. The one or more query ranking algorithms utilizes the context (e.g., the type of crop and specific conditions like heavy rainfall) and evaluates each multi-contextual intelligent query in relation to the context. For instance, the impact of heavy rainfall on rice differs from its impact on wheat or other crops, so queries more significant to the situation (or context) (e.g., rice fields in heavy rain) is ranked higher. Only the top 2 high ranked queries are sent to the cloud agent 116A.

At step 314 of the method 300, the one or more hardware processors 104 are configured to recommend at least one actionable instructions from the set of actionable instructions to be performed in the farm in response to the at least one possible event, wherein the at least one actionable instruction to be performed in the farm is obtained by processing a pair of the refined multi-contextual intelligent queries from the set of refined multi-contextual intelligent queries and the relevant response, using a pre-trained AI/ML model. The pre-trained AI/ML model is a dynamic model and are based on one or more parameters relevant to one or more farm management scenarios, and wherein the AI/ML model utilizes one or more domain specific rules, one or more context specific rules, and one or more rules specific to weather, climate and geography. The set of actionable instructions are stored at the response collection and instruction management module 110B. The response collection and instruction management module 110B is a component of the farm agent 110A (a kind of input handler) responsible for receiving, logging and managing the response for each refined multi-contextual intelligent query. The response collection and instruction management module 110B stores both refined multi-contextual intelligent query and the associated response in a structured manner for traceability, future use and analysis. The response collection and instruction management module 110B has a persistent storage system (e.g., database (relational/NoSQL), cloud-based storage, or log files) where a pair of the sequentially processed refined multi-contextual query and the relevant response are processed and stored using the pre-trained AI/ML model. The storage at the response collection and instruction management module 110B follows certain data structure as:

Query ID (unique identifier)
Query content
Response content
Timestamp (when the query was sent and when the response was received) Status (success/failure etc.)
Metadata (e.g., response time, cloud agent details).

According to an embodiment, the at least one actionable instruction from the set of actionable instructions is transmitted to one or more farm machineries in response to the at least one possible event. To transmit the at least one actionable instruction to the one or more farm machineries, an actuation module 110C coordinates with farm agent module 110A placed at the edge. The actuation module 110C analyses the at least one actionable instruction suggested by the response collection and instruction management module 110B and enables the one or more farm machineries to function as per the at least one actionable instruction. The system 100 also analyses one or more pre-defined rules to trigger one or more actions on farm machineries (e.g., devices/systems relevant in farm scenario). The actuation module 110C also sends one or more notifications to a person responsible/ user to execute the at least one actionable instructions. Below is the mathematical representation of the process:

Following inputs are given in the process

a. $Q_i$: The refined multi-contextual intelligent query.
b. $R(Q_i)$: The response to refined multi-contextual intelligent query $Q_i$
c. $T_a(Q_i)$: Time when action $A(Q_i)$ is triggered.
d. $A(Q_i)$: The action triggered by the actuation module 110C based on response $R(Q_i)$.

Next, the actuation module 110C uses a decision function ($D(Q_i)$) to determine whether an action should be triggered. This function analyzes the response and applies the set of pre-defined rules to decide on the next steps.

$$D(Q_i) = f(R(Q_i), Rules) \qquad (28)$$

Where:

- $f$ is a function that processes the response $R(Q_i)$ and evaluates it against the set of pre-defined rules.
- The output D(Qi) can either be:

  ➢ Action required: If the at least one an action is required based on the response.
  ➢ No Action: If no action is needed.

If $D(Q_i)$= action required, the module actuation module 110C will trigger an action $A(Q_i)$. Action can be represented as:

$$A(Q_i) = \{a_1, a_2, a_3, \ldots \ldots a_m\} \qquad (29)$$

Where $a_j$ represents a specific action that can be performed. For example-

- $a_1$: Turn on the irrigation system.
- $a_2$: Send an alert to the user.
- $a_3$: Stop farm machinery.

Next, rules define when certain actions are triggered. Suppose:

- $Condition_j$ represent a condition based on the response (e.g., soil moisture below threshold, heavy rainfall).
- $Threshold_k$ represent a predefined threshold for triggering specific actions (e.g., a moisture level below 30%).

The Rules can be expressed as logical conditions:

$$Rule_j: If\ Condition_j\big(R(Q_i)\big) < Threshold_k \rightarrow A(Q_i) = a_j$$

For example-

If $R(Q_i)$ indicates heavy rainfall:
If Rainfall_Forecast $(R(Q_i))$> 50 mm → $A(Q_i)$= Turn off irrigation system
If $R(Q_i)$ indicates low soil moisture:
If Soil Moisture $(R(Q_i))$< 30 % → $A(Q_i)$= Turn on irrigation system once the action $A(Q_i)$ is triggered, the Actuation Module of Farm Agent interacts with physical devices or systems. The time when the actuation starts is recorded as $T_a(Q_i)$

$$L\big(A(Q_i)\big) = \{Action\ ID,\ Q_i,\ A(Q_i),\ T_a(Q_i),\ Status,\ M\big(A(Q_i)\big)\} \tag{30}$$

Where: *Action ID* is a unique identifier for the action.
$M(A(Q_i))$ Is meta data related to the action (e.g., duration, device response, etc.)

According to an embodiment, the farm agent 110A receives one or more feedbacks from the one or more farm machineries to assesses an accuracy of the at least one actionable instruction transmitted in response to the at least one possible event, wherein the feedback is utilized for generation of a next set of multi-contextual intelligent queries in response to one or more next possible events. The system 100 is equipped with the feedback mechanism that analyses each actionable instruction recommended as the response to the one or more multi-contextual intelligent queries raised by the farm agent. The feedback mechanism checks the accuracy of the response as well as it scores the response based on the accuracy.

NLP MODEL TRAINING FOR QUERY GENERATION:

During NLP model training, an existing multi-dimensional agricultural knowledge from different sources such as publications, research papers, text-books, references, journals, metadata etc. is converted into a form of query (millions of queries) and each query will be converted into a graphical form. A plurality of queries converted into the graphical form are stored in a graph query DB as a plurality of knowledge graphs.

These queries are pre-processed before converting into the knowledge graphs. In the graphical form, each node of the knowledge graph represents one or more critical entities like crop types or environmental conditions, and edges of the knowledge graph represent relationships between one or more critical entities. The NLP model is trained on the plurality of knowledge graphs. During training, once the event is triggered by the farm agent, the farm-level information is converted into a sensor graph and transmitted to the NLP model. The NLP model generates one or more relevant query (or queries) in response.

The NLP model is based on graph neural networks (GNNs) and is trained on the plurality of knowledge graphs representing the one or more query. The process of gathering and processing the plurality of agricultural data to create the plurality of knowledge graphs (an ensemble of queries) and training the NLP model is represented mathematically as follows:

Let *S* represent the set of existing knowledge sources representing the plurality of agricultural data.

Let $Q = \{q_1, q_2, q_3, ... ... ... q_n\}$ represent the dataset of queries related to agriculture collected from *S*.

$$Q = U_{i=1}^m S_i \tag{31}$$

where $S_i$ is a knowledge source, and Q is the union of all queries from these sources.
Further,
Let Prepresent the preprocessing function applied to each query $q_i$.

The preprocessed dataset $Q_P$ is:

$$Q_P = \{P(q_1), P(q_2), \ldots . P(q_n)\} \qquad (32)$$

Then,

Let $G(q_i)$ represent the function that converts a pre-processed query $P(q_i)$ into a knowledge graph $g_i$.

The knowledge graph $g_i = (V_i, E_i)$ where $V_i$ is the set of nodes (representing entities) and $E_i$ is the set of edges (representing relationships):

$$gi = G\big(P(q_i)\big) \qquad (33)$$

The entire set of graph-structured queries (the knowledge graph) is-

$$\varphi = \{g_1, g_2 \ldots . g_n\} \qquad (34)$$

where $\varphi$ represents the set of all graph-structured queries.

Next,

Suppose $M$ represents the NLP model based on Graph Neural Networks (GNNs). The model Mis trained on the set $\varphi$, learning the mapping from graph structures to relevant actions A *:*

$$M \colon \varphi \to A \qquad (35)$$

where Ais the set of potential actions or responses relevant to the agricultural queries.

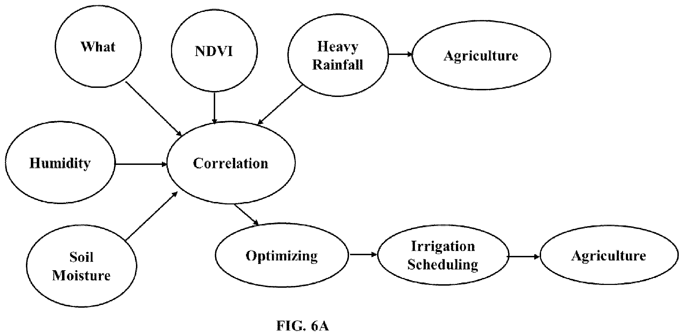

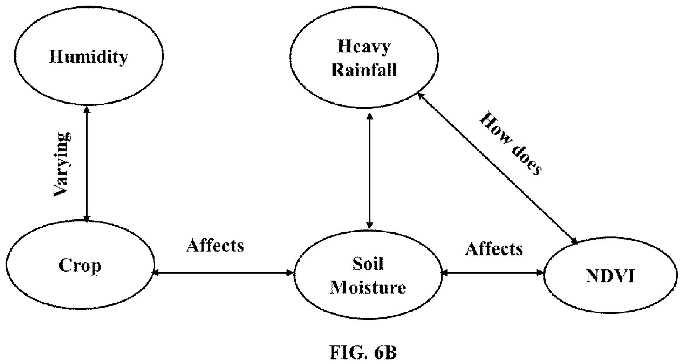

The graphical illustration of a query stored in the graph queries DB in the form of the knowledge graph, such as "How does heavy rainfall affect soil moisture dynamics and NDVI in crops under varying humidity conditions?" is presented in FIG. 6A. The graphical illustration of a query stored in the graph queries DB in the form of the knowledge graph, such as "What is the correlation between soil moisture, humidity, and NDVI during periods of heavy rainfall for optimizing irrigation scheduling in agriculture?" is presented in FIG. 6B.

USE CASE:

An example scenario depicting the method of automated farm management involving capture of relevant data points, sensor graph generation of relevant queries and generation of recommended actions based on the relevant queries at the farm scenario, by the disclosed system 100 is described below. A one-hectare farm of user Kisan Singh in a village Kaisani in semi-arid region of Dhar district Madhya Pradesh in Central India has been selected for the study. The AFMS is installed in the field and is communicatively coupled to various farm machineries to collect the plurality of data points via plurality of devices active in the farm. The AFMS utilizes a mobile application carried by Kisan Singh to capture the geocoordinate of the farm, soil type, rainfed area and agronomical practices details etc. The data captured from the mobile device serves as one or more data points along with other active sensors and devices installed in the farm. The AFMS is connected to nearby weather stations to capture one or more weather related data points. The plurality of data points such as ambient temperature, minimum and maximum soil temperature during different times of the day, hourly rainfall in mm, wind speed and direction, soil moisture, evapotranspiration (derived data point) etc. are captured to identity a plurality of context aware events. The plurality of identified context aware events based on the above data points are:

- Increased soil moisture
- Possible waterlogging
- Pest infestation followed by disease progression
- Nutrient deficiency
- Crop lodging

The above context aware events (as potential events) are ranked on the basis of the severity level by using the NLP model, and the assigned ranks are presented in Table-1 as:

Table-1

| Event | Event Type | Severity | Intensity | Impact | Rank |
|---|---|---|---|---|---|
| Rainfall | Detect | High | High | High | I |
| Farm Inundation | Predict | High | High | Moderate | II |
| Root rot | Predict | High | Moderate | High | III |
| Nutrient deficiency | Predict | Moderate | Moderate | High | IV |
| Insect Pest | Predict | Moderate | Moderate | Moderate | V |
| crop lodging | Predict | Low | Low | Low | VI |

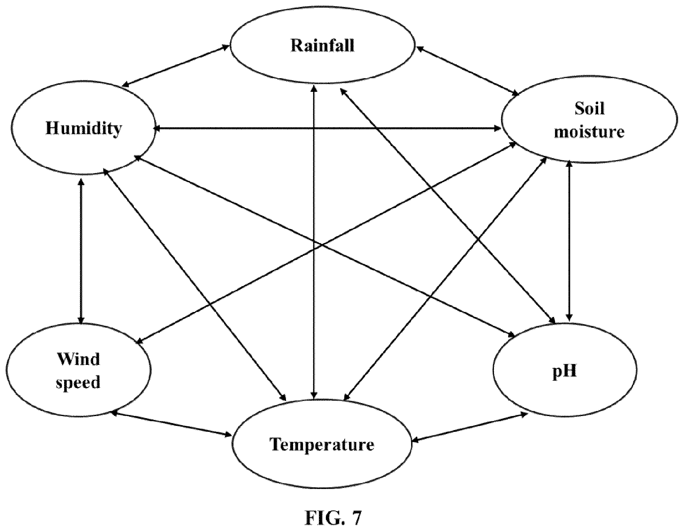

Based on the severity-based ranking, the AFMS recommends the heavy rainfall and farm inundation as possible events. The data points related to the possible events like 150 mm rainfall, temperature ranging from a high of 28.19°C to a low of 25.17°C, and a relative humidity ranging from a maximum of 97% to a minimum of 78%, and a wind speed of 10.72 km/h for the last two days appeared to be crucial for a 30 days old JS 9560 soybean crop standing in the farm. These data points are provided to the GNN model to generate a sensor graph as shown in FIG. 7. The sensor graph is provided to the NLP model GNN that scans the sensor graph to identify one or more relevant knowledge graphs (i.e., graphical representation of queries) from the graph query DB. The NLP model also utilized stored contextual knowledge in the graph query DB like possible diseases associated with waterlogging (like root rot, anthracnose and pod blight), nitrogen deficiency and increase the sucking insect pest incidence on soybean crop. These knowledge graphs form a set of multi-contextual intelligent queries as:

- Will waterlogging affect the crop roots?
- What are the best drainage solutions for this condition?
- Which disease and how to manage?
- What are necessary actions that should be done after heavy rainfall?
- Any possibilities of crop lodging?
- Which nutrient deficiency is due to heavy rainfall?
- Which insect pest incidence possibilities after heavy rainfall?
- Hot to improving soil fertility

The set of multi-contextual intelligent queries comprising 8 queries were assessed using ranking algorithms and finally three queries were taken for further refinement based on the principles of communication, weight assignment and domain-based vocabulary. Transformation of the multi-contextual intelligent queries to form the refined set of multi-contextual intelligent is presented in Table-2:

Table-2

| Multi-contextual intelligent queries. | Query Refinement process- PoC (weightage Low, Moderate, High) and DV | Refined Query |
|---|---|---|
| 1. What are the best drainage solutions for this condition? | Urgency (U), Clarity (CL), Relevance (R), Conciseness (CO), Specificity (SP), and Accuracy (AC), Context (C), Domain (DO) | What are the best drainage solutions for heavy rainfall receiving 150 mm in two days, in the 30 days old soybean JS 9560 crop variety with black cotton soil at Dhar Madhya Pradesh region? |
| 2. What are necessary actions that should be done after heavy rainfall? | Urgency (U), Clarity (CL), Relevance (R), Conciseness (CO), Specificity (SP), and Accuracy (AC), Context (C), Domain (DO) | At 30 days old soybean crop JS 9560 variety are suffering from suddenly heavy rainfall 150 mm, the temperature ranged from a high of 28.19°C to a low of 25.17°C, and the relative humidity ranged from a maximum of 97% to a minimum of 78%. The wind speed was 10.72 km/h for the last two days of Indore Madhya Pradesh region, what could be the preventive actions that I can take against the incidence of major diseases. |

(continued)

| Multi-contextual intelligent queries. | Query Refinement process- PoC (weightage Low, Moderate, High) and DV | Refined Query |
|---|---|---|
| 3. Which disease and how to manage? | Clarity (CL), Relevance (R), Conciseness (CO), Specificity (SP), and Accuracy (AC), Context (C), Domain (DO), User expectation (UE), Completeness (CP). | At 30 days old soybean crop JS 9560 variety are suffering from suddenly heavy rainfall 150 mm, the temperature ranged from a high of 28.19°C to a low of 25.17°C, and the relative humidity ranged from a maximum of 97% to a minimum of 78%. The wind speed was 10.72 km/h for the last two days of at Dhar Madhya Pradesh region, what could be the preventive actions that I can take against the incidence of fungal diseases in the crop? |

Based on query refined based on principles of communication, weight assignment and domain-based vocabulary, the set of refined multi-contextual intelligent queries comprising above three refined queries are provided to a GPT (Generative Pre-trained Transformer) model and the GPT generated the response as:

Response for 1st Query

Recommendation - Drain the excessive water from the farm
Action - Turn on drainage pump automatically after heavy rainfall and turn off after 2 hours or when the field is drained.

Response for 2nd Query

Recommendation - Avoid overwatering (irrigation)
Action - Drain the water from soybean field. Using the hot air blower and circulates warm air to dry the field without damaging the crop. Monitor the soybean plants for pests and diseases and take appropriate control measures

Response for 3rd Query

Recommendation - Monitoring the fungal diseases
Action - Heavy rainfall during the vegetative stage of soybeans creates ideal conditions for the development of various fungal diseases such as Phytophthora Root Rot, Rhizoctonia Root Rot, Anthracnose and pod blight. Capture high-resolution images of the crop, allowing for early detection of disease symptoms. Identify, if any disease outbreaks. Apply fungicides only to areas where they are needed.

The response generated by the GPT is provided to the pre-trained AI/ML model to generate actionable instructions to tackle the possible event (heavy rainfall) by prompting the highest ranked queries(1-3). The recommended actionable instructions are transmitted to the farm agent.to communicate to a farm machinery responsible to take recommended action.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein addresses unresolved problem of managing farm by navigating through unexpected future event through connected query graphs. The disclosed technical approach for the automated farm management involves detecting and predicting future events in the farms (an agricultural field) by utilizing a plurality of relevant data gathered through one or more IoT sensors and sensor-based devices. The relevant data is converted into graphical form using NLP techniques to derive multi-contextual intelligent query. The multi-contextual intelligent query is refined by using domain knowledge and weighted principles of communications. The refined multi-contextual intelligent query is provided to a remotely located LLM model to generate a set of recommendations. The most suitable recommendation is transmitted to an associated autonomous farm equipment to take suitable action. The system is also supported by a feedback mechanism to improve future query generation. The at least one identified event and the set of set of multi-contextual intelligent queries in response to the identified event is executed by a farm agent associated with the one or more farm machineries, and generation of the set of responses and recommendation of the at least one actionable instruction is executed by a cloud agent located at a remote server, and wherein the farm agent and the cloud agent communicates to each other via application programming interface (API).

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

**1.** A processor implemented method (300) of automated farm management, the method comprises steps of:

receiving (302), via one or more hardware processors, a plurality of data points from a geocoded farm through one or more sensors, wherein the plurality of data points, and a contextual knowledge associated with each one of the plurality of data points are processed to identity a plurality of context aware events;
assessing (304), via the one or more hardware processors, the plurality of context aware events on a severity level by using one or more NLP techniques to identify at least one possible event from the plurality of context aware events;
generating (306), via the one or more hardware processors, a sensor graph by fusing one or more data points from the plurality of data points relevant to at least one possible event using a graphical neural network (GNN) model, and wherein the sensor graph represents the at least one possible event;
processing (308), via the one or more hardware processors, the sensor graph representing the at least one possible event using a pre-trained natural language processing (NLP) model to identify one or more knowledge graphs from among a plurality of knowledge graphs matching the sensor graph, wherein the plurality of knowledge graphs are stored in a graph queries database (DB), and wherein the one or more knowledge graphs matching the sensor graph represents a set of multi-contextual intelligent queries;

refining (310), via the one or more hardware processors, the set of multi-contextual intelligent queries by utilizing one or more weighted principles of communications, and one or more event specific domain-based vocabulary to obtain a set of refined multi-contextual intelligent queries, and wherein each refined multi-contextual intelligent query within the set of refined multi-contextual intelligent queries are ranked using one or more query ranking algorithms;

generating (312), via the one or more hardware processors, a set of actionable instructions by sending a set of refined multi-contextual intelligent queries to at least one LLM model, wherein the at least one LLM model sequentially processes each refined multi-contextual intelligent query from among the refined multi-contextual intelligent queries, and generates a relevant response against each refined multi-contextual intelligent query; and

recommending (314), via the one or more hardware processors, at least one actionable instructions from the set of actionable instructions to be performed in the farm in response to the at least one possible event, wherein the at least one actionable instruction to be performed in the farm is obtained by processing a pair of the refined multi-contextual intelligent queries from the set of refined multi-contextual intelligent queries and the relevant response, using a pre-trained artificial intelligence/Machine learning (AI/ML) model.

2. The method as claimed in claim 1, wherein the at least one actionable instruction from the set of actionable instructions is transmitted to one or more farm machineries in response to the at least one possible event, and wherein one or more feedback from the one or more farm machineries for assessing an accuracy of the at least one actionable instruction is transmitted in response to the at least one possible event, and wherein the one or more feedback is utilized for generation of a next set of multi-contextual intelligent queries in response to one or more next possible events.

3. The method as claimed in claim 1, wherein the at least one possible event and the set of multi-contextual intelligent queries in response to the at least one possible event are executed by a farm agent associated with the one or more farm machineries, and generation of the set of the relevant responses and recommendation of the at least one actionable instruction is executed by a cloud agent located at a remote server, and wherein the farm agent and the cloud agent communicates to each other via an application programming interface (API), and wherein the pre-trained AI/ML, model is a dynamic model and is based on one or more parameters relevant to one or more farm management scenarios, and wherein the AI/ML model utilizes one or more domain specific rules, one or more context specific rules, and one or more rules specific to weather, climate and geography.

4. The method as claimed in claim 1, wherein the plurality of data points are collected via an automatic farm monitoring system (AFMS) connected to the farm through a plurality of devices that collects a temporal data and a spatial data at periodic intervals, and wherein the AFMS receives the plurality of data points about the farm by one or more direct, and one or more indirect sensors comprising at least a remote sensing data, an internet of things (IoT) data, and a crowd sensing data and wherein the AFMS communicates through the farm agent to leverage a comprehensive network of sensors and a contextual knowledge to optimize one or more farm operations.

5. The method as claimed in claim 1, wherein each refined multi-contextual intelligent query from the set of refined multi-contextual intelligent queries is ranked using the one or more query ranking algorithms that identify a context from the at least one possible event and evaluates a relevance of each refined multi-contextual intelligent query, wherein

the refined multi-contextual intelligent query with a highest query score is provided to the LLM model for generating the set of responses, and
a remaining set of refined multi-contextual intelligent queries from the set of refined multi-contextual intelligent queries are combined to form a single nested query without losing the context.

6. The method as claimed in claim 1, wherein the graph queries DB comprises a plurality of relevant farming information, and wherein the plurality of relevant farming information comprises an associated knowledge of one or more crops, one or more recommended agronomy practices, one or more fields, one or more region, climate type, and soil type, and associated context.

7. The method as claimed in claim 1, wherein the set of refined multi-contextual intelligent queries from the set of multi-contextual intelligent queries is obtained using a principle-specific score $S(Q)$, and wherein the principle-specific score is calculated using an equation:

$$S(Q) \;=\; \left[S_{CL},\; S_R,\; S_{CO},\; S_{SP},\; S_{AC},\; ...,\; S_{pcn}\right]$$

Where for n number of principles, $S_{CL}$ represents a clarity score, $S_R$ represents a relevance score, $S_{CO}$ represents conciseness, $S_{SP}$ represents specificity, and $S_{AC}$ represents an accuracy, and $S_{pcn}$ represents $n^{th}$ principle.

8.  A system (100), comprising:

   a memory (102) storing instructions;
   one or more communication interfaces (106); and
   one or more hardware processors (104) coupled to the memory (102) via the one or more communication interfaces (106), wherein the one or more hardware processors (104) are configured by the instructions to:

   receive a plurality of data points from a geocoded farm through one or more sensors, wherein the plurality of data points, and a contextual knowledge associated with each one of the plurality of data points are processed to identity a plurality of context aware events;
   assess the plurality of context aware events on a severity level by using one or more NLP techniques to identify at least one possible event from the plurality of context aware events;
   generate a sensor graph by fusing one or more data points from the plurality of data points relevant to at least one possible event using a graphical neural network (GNN) model, and wherein the sensor graph represents the at least one possible event;
   process the sensor graph representing the at least one possible event using a pre-trained natural language processing (NLP) model to identify one or more knowledge graphs from among a plurality of knowledge graphs matching the sensor graph, wherein the plurality of knowledge graphs are stored in a graph queries database (DB), and wherein the one or more knowledge graphs matching the sensor graph represents a set of multi-contextual intelligent queries;
   refine the set of multi-contextual intelligent queries by utilizing one or more weighted principles of communications, and one or more event specific domain-based vocabulary to obtain a set of refined multi-contextual intelligent queries, and wherein each refined multi-contextual intelligent query within the set of refined multi-contextual intelligent queries are ranked using one or more query ranking algorithms;
   generate a set of actionable instructions by sending a set of refined multi-contextual intelligent queries to at least one LLM model, wherein the at least one LLM model sequentially processes each refined multi-contextual intelligent query from among the refined multi-contextual intelligent queries, and generates a relevant response against each refined multi-contextual intelligent query; and
   recommend at least one actionable instructions from the set of actionable instructions to be performed in the farm in response to the at least one possible event, wherein the at least one actionable instruction to be performed in the farm is obtained by processing a pair of the refined multi-contextual intelligent queries from the set of refined multi-contextual intelligent queries and the relevant response, using a pre-trained AI/ML model.

9.  The system as claimed in claim 8, wherein the at least one actionable instruction from the set of actionable instructions is transmitted to one or more farm machineries in response to the at least one possible event, and wherein one or more feedback from the one or more farm machineries for assessing an accuracy of the at least one actionable instruction is transmitted in response to the at least one possible event, and wherein the one or more feedback is utilized for generation of a next set of multi-contextual intelligent queries in response to one or more next possible events.

10. The system as claimed in claim 8, wherein the at least one possible event and the set of multi-contextual intelligent queries in response to the possible event are executed by a farm agent associated with the one or more farm machineries, and generation of the set of the relevant responses and recommendation of the at least one actionable instruction is executed by a cloud agent located at a remote server, and wherein the farm agent and the cloud agent communicates to each other via an application programming interface (API), and wherein the pre-trained AI/ML model is a dynamic model and are based on one or more parameters relevant to one or more farm management scenarios, and wherein the AI/ML model utilizes one or more domain specific rules, one or more context specific rules, and one or more rules specific to weather, climate and geography.

11. The system as claimed in claim 8, wherein the plurality of agricultural data is collected via an automatic farm monitoring system (AFMS) connected to the farm through a plurality of devices that collects a temporal data and a spatial data at periodic intervals, and wherein the AFMS receives the plurality of agricultural data about the farm by one or more direct, and one or more indirect sensors comprising a remote sensing data, an internet of things (IoT) data, and a crowd sensing data and wherein the AFMS communicates through the farm agent to leverage a comprehensive network of sensors and a contextual knowledge to optimize one or more farm operations.

12. The system as claimed in claim 8, wherein each refined multi-contextual intelligent query from the set of refined multi-contextual intelligent queries is ranked using one or more query ranking algorithms that identify a context from the at least one possible event and evaluates a relevance of each refined multi-contextual intelligent query, wherein

the refined multi-contextual intelligent query with a highest query score is provided to the LLM model for generating the set of responses, and
a remaining set of refined multi-contextual intelligent queries from the set of refined multi-contextual intelligent queries are combined to form a single nested query without losing the context.

13. The system as claimed in claim 8, wherein the graph queries DB comprises a plurality of relevant farming information, and wherein the plurality of relevant farming information comprises an associated knowledge of one or more crops, one or more recommended agronomy practices, one or more fields, one or more region, climate type, and soil type, and associated context.

14. The system as claimed in claim 8, wherein the set of refined multi-contextual intelligent queries from the set of multi-contextual intelligent queries is obtained using a principle-specific score $S(Q)$, and wherein the principle-specific score is calculated using an equation:

$$S(Q) = \begin{bmatrix} S_{CL}, & S_R, & S_{CO}, & S_{SP}, & S_{AC}, & ..., & S_{pcn} \end{bmatrix}$$

Where for n number of principles, $S_{CL}$ represents a clarity score, $S_R$ represents a relevance score, $S_{CO}$ represents conciseness, $S_{SP}$ represents specificity, and $S_{AC}$ represents an accuracy, and $S_{pcn}$ represents $n^{th}$ principle.

15. One or more non-transitory machine-readable information storage mediums comprising one or more instructions which when executed by one or more hardware processors cause:

receiving a plurality of data points from a geocoded farm through one or more sensors, wherein the plurality of data points, and a contextual knowledge associated with each one of the plurality of data points are processed to identity a plurality of context aware events;
assessing the plurality of context aware events on a severity level by using one or more NLP techniques to identify at least one possible event from the plurality of context aware events;
generating a sensor graph by fusing one or more data points from the plurality of data points relevant to at least one possible event using a graphical neural network (GNN) model, and wherein the sensor graph represents the at least one possible event;
processing the sensor graph representing the at least one possible event using a pre-trained natural language processing (NLP) model to identify one or more knowledge graphs from among a plurality of knowledge graphs matching the sensor graph, wherein the plurality of knowledge graphs are stored in a graph queries database (DB), and wherein the one or more knowledge graphs matching the sensor graph represents a set of multi-contextual intelligent queries;
refining the set of multi-contextual intelligent queries by utilizing one or more weighted principles of communications, and one or more event specific domain-based vocabulary to obtain a set of refined multi-contextual intelligent queries, and wherein each refined multi-contextual intelligent query within the set of refined multi-contextual intelligent queries are ranked using one or more query ranking algorithms;
generating a set of actionable instructions by sending a set of refined multi-contextual intelligent queries to at least one LLM model, wherein the at least one LLM model sequentially processes each refined multi-contextual intelligent query from among the refined multi-contextual intelligent queries, and generates a relevant response against each refined multi-contextual intelligent query; and
recommending at least one actionable instructions from the set of actionable instructions to be performed in the farm in response to the at least one possible event, wherein the at least one actionable instruction to be performed in the farm is obtained by processing a pair of the refined multi-contextual intelligent queries from the set of refined multi-contextual intelligent queries and the relevant response, using a pre-trained artificial intelligence/Machine learning (AI/ML) model.

System **100**

| Processors(s) **104** | I/O Interface(s) **106** |

Database **108**

Cloud server **116**

Cloud agent **116A**

Memory **102**

FARM MANAGEMENT MODEL **110**

Farm Agent **110A**

Response collection and instruction management module **110B**

Actuation module **110 C**

FIG. 1

218

query interaction log (feedback)

212

214

Response collection and instruction management module

refined multi-contextual query(s)

Cloud AI agent

210

216

query refinement

Pre-trained NLP model

208

actuation module

204

Possible event identification

sensor graph

206

Graph queries database

AFMS (multi-modal, multi-source, spatial and temporal data collection, pre-processing, and fusion)

202

Farm agent

Recommended action performed on the farm

FIG. 2

300

receiving a plurality of data points from a geocoded farm through one or more sensors, wherein the plurality of data points, and a contextual knowledge associated with each one of the plurality of data points are processed to identify a plurality of context aware events    302

assessing the plurality of context aware events on a severity level by using one or more NLP techniques to  identify  at least one possible event from the plurality of context aware events    304

generating a sensor graph by fusing one or more data points from the plurality of data points relevant to at least one possible event using a graphical neural network (GNN) model, and wherein the sensor graph represents the at least one possible event    306

A

FIG. 3A

A

processing the sensor graph representing the at least one possible event using a pre-trained natural language processing (NLP) model to identify one or more knowledge graphs from among a plurality of knowledge graphs matching the sensor graph, wherein the plurality of knowledge graphs are stored in a graph queries database (DB), and wherein the one or more knowledge graphs matching the sensor graph represents a set of multi-contextual intelligent queries

308

refining the set of multi-contextual intelligent queries by utilizing one or more weighted principles of communications, and one or more event specific domain-based vocabulary to obtain a set of refined multi-contextual intelligent queries, and wherein each refined multi-contextual intelligent query within the set of refined multi-contextual intelligent queries are ranked using on or more query ranking algorithms

310

B

FIG. 3B

B

generating a set of actionable instructions by sending a set of refined multi-contextual intelligent queries to at least one LLM model, wherein the at least one LLM model sequentially processes each refined multi-contextual intelligent query from among the refined multi-contextual intelligent queries, and generates a relevant response against each refined multi-contextual intelligent query — 312

recommending at least one actionable instructions from the set of actionable instructions to be performed in the farm in response to the at least one possible event, wherein the at least one actionable instruction to be performed in the farm is obtained by processing a pair of the refined multi-contextual intelligent queries from the set of refined multi-contextual intelligent queries and the relevant response, using a pre-trained AI/ML model — 314

FIG. 3C

FIG. 4

Set of Principles
P(L.pn)

Domain Vocabulary (or
Dictionary) consisting of
"each principle" specific
Verbs and Adjectives

Set of Domain Verb
v (1v.. n)

Set of Domain Adjectives
a (1 .. an)

Set of Graphs for
each Principle P(1.. gpn)

Check Event
specific Graph

Generate
event
specific
Token using

FIG. 5

FIG. 6A

FIG. 6B

FIG. 7

Europäisches Patentamt

European Patent Office

Office européen des brevets

# EUROPEAN SEARCH REPORT

**Application Number**

EP 25 20 2564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHAO XINYAN ET AL: "Implementation of Large Language Models and Agricultural Knowledge Graphs for Efficient Plant Disease Detection", AGRICULTURE, vol. 14, no. 8, 14 August 2024 (2024-08-14), pages 1-24, XP093352654, ISSN: 2077-0472, DOI: 10.3390/agriculture14081359 Retrieved from the Internet: URL:https://www.mdpi.com/2077-0472/14/8/1359> * page 3 * * page 5 - page 7 * * page 9 - page 13; figure 3 * ----- | 1-15 | INV. G06F16/3329 A01C21/00 A01C23/00 A01C23/04 A01G25/16 A01M7/00 G06F16/36 G06N20/00 G06Q50/02 |
| A | Waller Peter ET AL: "Soil Physics, Subsurface Drainage Design and Installation" In: "Irrigation and Drainage Engineering", 31 December 2016 (2016-12-31), Springer Nature, Switzerland, XP093352659, ISBN: 978-3-319-05699-9 pages 1-34, DOI: 10.1007/978-3-319-05699-9, * page 47 * * page 539 - page 540 * ----- | 1-15 | |

**TECHNICAL FIELDS SEARCHED (IPC)**

G06F
A01M
A01C
G06Q
G06N
A01G

The present search report has been drawn up for all claims

| Place of search | Date of completion of the search | Examiner |
|---|---|---|
| The Hague | 12 January 2026 | Rameseder, Jonathan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421102594